# FASCICULE DE BREVET EUROPEEN

(11) **EP 3 214 928 B1**
(45) Date de publication et mention de la délivrance du brevet: **16.12.2020**
(21) Numéro de dépôt: 15798531.8
(22) Date de dépôt: 03.11.2015
(51) Int. Cl.: A01K 61/73

(54) **ELEMENT POUR LE DEVELOPPEMENT DE LA FAUNE OU DE LA FLORE AQUATIQUE, ET DISPOSITIF D'HABITAT ARTIFICIEL COMPRENANT AU MOINS UN TEL ELEMENT**
ELEMENT ZUR ENTWICKLUNG VON GEWÄSSERFAUNA UND -FLORA UND VORRICHTUNG FÜR KÜNSTLICH GESCHAFFENEN LEBENSRAUM MIT MINDESTENS EINEM SOLCHEN ELEMENT
ELEMENT FOR DEVELOPING AQUATIC FAUNA AND FLORA, AND MAN-MADE HABITAT DEVICE COMPRISING AT LEAST ONE SUCH ELEMENT

(30) Priorité: 04.11.2014 FR 1460611
(43) Date de publication de la demande: 13.09.2017
(73) Titulaire: Egis Eau, 34000 Montpellier (FR)
(72) Inventeur: PERROT, Martin, 34070 Montpellier (FR); LAPINSKI, Mathieu, 34000 Montpellier (FR); MONIER, Thierry, 34110 Vic la Gardiole (FR)
(74) Mandataire: Derambure Conseil
(86) Numéro de dépôt international: PCT/FR2015/052947
(87) Numéro de publication internationale: WO 2016/071616

(56) Documents cités:
- JP-A- 2007 020 460
- JP-A- 2008 069 473
- JP-U- S61 104 064
- US-A- 3 118 424

## Description

L'invention a trait aux équipements aquatiques, notamment portuaires maritimes ou fluviaux, et concerne plus particulièrement un élément pour le développement de la faune ou la flore aquatique, ainsi qu'un dispositif d'habitat artificiel comprenant au moins un tel élément, le dispositif étant évolutif et adaptable à des structures (par exemple des quais) existantes.

JP 2008 069473 A divulgue un élément pour le développement de la faune ou de la flore aquatique, comportant un réseau de brins souples fixés entre deux cordes souples s'étendant suivant une direction longitudinale, les deux cordes souples présentant au moins un bord et lesdits brins présentant une portion saillante dudit au moins un bord suivant une direction transversale. US 3 118 424 A divulgue un élément convenable pour le développement de la faune ou de la flore aquatique, comportant un réseau de brins souples fixés entre deux fils souples s'étendant suivant une direction longitudinale, les deux fils souples présentant au moins un bord et lesdits brins présentant une portion saillante dudit au moins un bord suivant une direction transversale.

Dans les fonds maritimes ou fluviaux, certaines espèces animales profitent de la végétation pour échapper à leurs prédateurs. Cette végétation marine forme une zone protectrice pour ces espèces, car les prédateurs, souvent plus volumineux, ne peuvent pas facilement se déplacer dans la végétation.

Lorsqu'on réalise des ports, ou d'autres installations maritimes, fluviales ou lacustres de manière artificielle, on modifie le relief naturel afin d'aménager l'espace pour les activités maritimes prévues à cet endroit. Ces réalisations ont un impact souvent néfaste sur l'écosystème. Pour compenser ces effets néfastes, on peut tenter de simuler la nature avec des ouvrages artificiels, qui respectent toutefois la fonction de l'installation maritime.

On connait des ouvrages artificiels que l'on pose sur les fonds marins. De tels ouvrages ne sont pas adaptés pour être fixés sur les équipements portuaires.

L'invention propose un élément qui peut facilement être fixé sur des équipements existants, qui résiste aux efforts liés aux écoulements d'eau (par exemple dus aux mouvements des navires, par exemple, les courants générés par les propulseurs de navire).

A cet effet, l'invention concerne un élément selon la revendication 1 pour le développement de la faune ou la flore aquatique qui comporte un réseau de brins souples, fixés entre deux bandes souples s'étendant suivant une direction longitudinale solidarisées ensemble, les deux bandes souples présentant au moins un bord et lesdits brins présentant une portion saillante dudit au moins un bord suivant une direction transversale.

Ainsi réalisé, l'élément forme un espace d'abris aux juvéniles, notamment par la présence des portions saillantes des brins.

En outre, les brins souples peuvent être juxtaposés les uns par rapport aux autres.

Suivant un mode de réalisation avantageux, le réseau de brins souple peut comporter des brins en fibres naturelles qui peuvent être, de préférence, des fibres de chanvre, des fibres de coco ou un mélange de fibres de chanvre et de coco.

Suivant un autre mode de réalisation, le réseau de brins souples peut comporter des brins synthétiques, qui peuvent être en polypropylène.

En outre, ladite portion saillante peut présenter une longueur d'au moins 10 cm.

De manière avantageuse, les bandes souples peuvent être réalisées en matériau synthétique, qui peut être du polypropylène.

L'invention concerne également un dispositif d'habitat artificiel comportant au moins un élément tel que défini ci-dessus.

Dans le cadre d'un mode de réalisation avantageux qui sera décrit par la suite, l'élément est torsadé, tendu et fixé entre deux extrémités espacées l'une de l'autre suivant une direction longitudinale.

Le dispositif peut comporter, en outre, plusieurs éléments qui sont positionnés parallèlement entre eux suivant ladite direction longitudinale, les éléments étant espacés les uns des autres suivant une direction transversale.

Suivant un autre mode de réalisation avantageux, le dispositif peut comprendre plusieurs éléments torsadés qui se croisent.

Suivant encore un autre mode de réalisation, les extrémités des éléments peuvent être fixées respectivement chacune à un montant, les montants étant fixés sur un support au moyen d'au moins un plot de fixation, apte à fixer les montants à distance dudit support, ledit au moins un plot présentant une surface de fixation apte à venir prendre appui contre ledit support.

En outre, la distance entre le montant et le support peut être sensiblement de 30 cm.

Par ailleurs, les montants peuvent être fixés à distance réglable du support.

Selon certains modes de réalisation, les éléments ne perturbent pas l'amarrage ou ne sont pas susceptibles d'endommager les navires.

Pour pouvoir être exécutée, l'invention est exposée de façon suffisamment claire et complète dans la description suivante qui est, en plus, accompagnée de dessins dans lesquels :
- la figure 1 est une vue en perspective d'un élément conforme à l'invention, en vue éclatée,
- la figure 2 est une vue en perspective de l'élément montré en figure 1, assemblé,
- la figure 3 montre une partie d'un quai, en vue de côté, sur lequel est monté un dispositif conforme à l'invention,
- la figure 4 est une vue en perspective d'un quai sur lequel est monté un dispositif conforme à l'invention,
- la figure 5 montre un autre dispositif conforme à l'invention, vu de côté et en perspective, le dispositif étant monté sur un poteau cylindrique immergé, et
- la figure 6 est une vue en perspective d'un système de fixation selon un mode de réalisation.

Dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention.

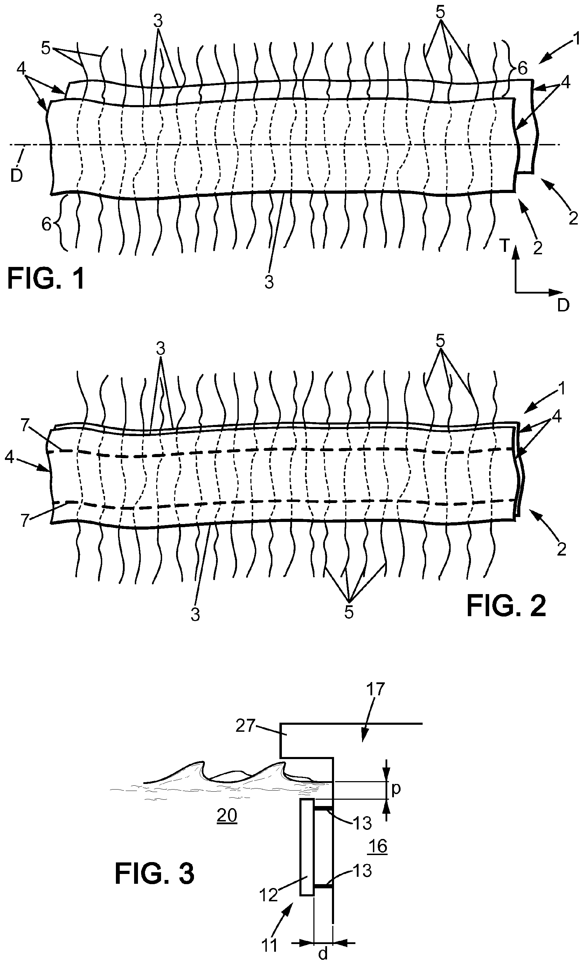

La figure 1 montre diverses pièces constituant un élément 1 conforme à l'invention avant son assemblage.

L'élément 1 comporte deux bandes souples 2, réalisées chacune en matériau synthétique, et plus précisément en polypropylène, qui s'étendent suivant une première direction longitudinale D. Le polypropylène présente la particularité d'être un matériau imputrescible. Il devra être compris que les bandes pourraient être réalisées dans un autre matériau imputrescible sans sortir du cadre de l'invention. Une bande désigne un composant dont la dimension selon une première direction principale (longueur) est largement supérieure à ses dimensions selon ses deux autres directions principales et, notamment, dans lequel la dimension selon une deuxième direction principale (largeur) est largement supérieure à sa dimension selon sa troisième direction principale (épaisseur). « Largement supérieur » désigne au moins un facteur 5, voire un facteur 10. Les première et deuxième directions principales définissent un plan moyen d'extension de la bande. Dans l'exemple présenté, une bande, posée au repos à plat sur un support, a sensiblement une forme de parallélépipède rectangle. D'autres formes ou des variations locales de cette forme, sont envisageables. Les deux bandes souples sont par exemple constituées du même matériau.

Une bande souple 2 présente deux bords 3 sensiblement parallèles entre eux, s'étendant suivant la direction longitudinale, et deux extrémités 4 opposées libres. Selon un exemple, les deux bandes présentent la même géométrie, et/ou sont symétriques l'une de l'autre par rapport à un plan médian.

Les deux bandes sont superposées l'une sur l'autre. C'est-à-dire que les deux bandes sont décalées l'une de l'autre dans le sens de l'épaisseur. Ainsi, les plans moyens d'extension des deux bandes sont parallèles, et les bandes sont décalées l'une de l'autre selon la direction normale à ces plans moyens d'extension. Les projections des deux bandes dans un des plans moyens d'extension sont sensiblement identiques (sur la figure 1, les deux bandes sont artificiellement représentées décalées l'une de l'autre selon les directions D et T pour faciliter la compréhension).

Entre les deux bandes, sont juxtaposées des brins souples 5 suivant une direction transversale T (la direction transversale est, dans le cadre de cet exemple, sensiblement perpendiculaire à la direction longitudinale D). Il s'agit par exemple de la direction de la largeur. Un brin désigne un composant dont la dimension selon une première direction principale (longueur) est très largement supérieure à ses dimensions selon ses deux autres directions principales et, notamment, dans lequel la dimension selon les deuxième et troisième directions principales (largeur/épaisseur) sont du même ordre de grandeur. « Très largement supérieur » désigne au moins un facteur 10, voire un facteur au moins 20. « Du même ordre de grandeur » désigne des rapports de taille entre ½ et 2, voire jusqu'à entre ¼ et 4. Ici, les brins souples 5 s'étendent tous principalement selon la direction T. En particulier, ils sont étendus sensiblement parallèlement les uns aux autres. Ils sont espacés les uns des autres selon la direction D. « Espacé » désigne ici le fait que leurs axes principaux sont espacés les uns des autres, deux brins adjacents pouvant avoir une surface périphérique en contact. Les brins souples 5 sont juxtaposés entre les deux bandes en ce qu'ils sont placés entre les deux bandes superposées.

Les brins peuvent être sensiblement rectilignes au repos. En variante, chaque brin peut toutefois présenter une forme propre. Les brins sont suffisamment souples pour pouvoir prendre une forme rectiligne lorsqu'une traction suffisante est exercée sur eux.

Les brins souples 5 présentent une longueur telle qu'ils comportent chacun au moins une portion saillante de l'un des bords 3 des bandes. Dans l'exemple illustré, les brins présentent chacun deux portions saillantes 6, de chaque coté des bords 3 des bandes 2. Les portions saillantes 6 ont une longueur d'au moins 30 cm dans le cadre de l'exemple présenté.
Il devra être entendu que l'invention n'est pas limitée à une longueur particulière de portions saillantes.
Dans le cadre de l'invention, les portions saillantes ont une longueur d'au moins, sensiblement, 10 cm.
La longueur des portions saillantes est choisie de préférence en fonction de la distance laissée entre un support vertical (par exemple un mur vertical submergé) et le dispositif conforme à l'invention, qui est fixé sur le support vertical (voir plus loin - distance d).

Les brins souples peuvent être tous identiques. Notamment, ils peuvent présenter des longueurs identiques. En variante, les brins souples 5 peuvent présenter des longueurs différentes, comme le montre la figure 1.

Ainsi positionnés entre les deux bandes souples 2, les brins souples 5 forment un réseau de brins souples sensiblement alignés les uns à côté des autres suivant une direction sensiblement perpendiculaire à la direction longitudinale des bandes souples 2.

Il devra être compris que les brins souples 5 pourraient être disposés différemment dans le réseau de brins sans toutefois sortir du cadre de l'invention : par exemple, un élément conforme à l'invention pourrait comporter un réseau de brins disposés suivant des directions aléatoires entre les bandes, pourvu qu'ils comportent une portion saillante d'au moins un des bords des bandes souples entre lesquelles ils sont positionnés.

L'orientation des brins souples suivant une direction transversale permet d'utiliser des brins moins longs entre les bandes, de sorte que l'élément conforme à l'invention obtenu est moins cher à réaliser.

Le réseau de brins souples 5 peut comporter une ou plusieurs sortes de brins : les brins peuvent être synthétiques, par exemple en polypropylène. Les brins peuvent également comporter, voire être constitués de fibres naturelles, comme les fibres de coco, ou des brins de chanvre. Le réseau de brins peut également comporter à la fois des brins naturels et des brins en fibres synthétiques.

La portion saillante des brins est notamment réalisée dans un matériau de densité proche de 1, de préférence entre 0,9 et 1,2.

Les brins synthétiques sont choisis dans un matériau résistant à une longue utilisation dans l'eau (matière inerte, non corrodable).

L'avantage d'utiliser des brins naturels est qu'ils sont respectueux de l'environnement.
Il devra être noté que les matériaux synthétiques, tels que le polypropylène, ne seront utilisés qu'à la condition que leur usage en milieu marin ait été reconnu (en conchyliculture par exemple)

Conformément à l'invention, les bandes souples 2 sont solidarisées entre elles, de manière à maintenir en place les brins souples 5.

Dans le cadre de l'exemple illustré sur les figures, et en particulier la figure 2, les bandes souples 2 sont solidarisées entre elles par couture. On peut par exemple avoir recours à deux coutures 7.

Les bandes souples 2 sont solidarisées ensemble de manière à ce que les brins souples 5 leurs soient solidarisés.

On a par exemple recours à deux bandes souples indépendantes l'une de l'autre cousues entre elles. En variante, les deux bandes souples superposées sont obtenues par pliure d'une bande unique de plus grand format.

Il devra être compris que des moyens de solidarisation autres que la couture pourraient être prévus sans sortir du cadre de l'invention. Par exemple, les bandes souples 2 et les brins souples 5 pourraient être solidarisés par soudure ou par collage.

Les éléments 1 conformes à l'invention sont destinés à être mis en œuvre dans au moins un dispositif conforme à l'invention.

Le dispositif a pour premier objectif de permettre le développement de la faune ou de la flore aquatique en constituant un habitat artificiel pour la faune et la flore aquatique. Le dispositif conforme à l'invention, montré plus particulièrement sur les figures 3 à 6, offre un abri pour les larves de poissons et les jeunes individus marins, de sorte qu'ils peuvent s'y développer afin de rejoindre plus tard les populations adultes en milieu naturel.

Le dispositif conforme à l'invention est capable de résister aux conditions du milieu aquatique dans lequel il est mis en place, comme la houle, les courants marins ou bien ceux générés par le mouvement des bateaux. L'élément 1 peut également résister aux procédures de nettoyage du quai.

Pour ce faire, dans l'exemple de réalisation illustré sur les figures 3 à 5, l'élément 1 est torsadé autour de la direction longitudinale D, créant un élément plus raide, moins large que les bandes 2 souples, de sorte que les portions saillantes 6 des brins souples 5 définissent un volume dans un espace tridimensionnel. Un « volume » est défini comme un espace dont aucune dimension caractéristique n'est très inférieure aux deux autres.

Cette répartition des portions saillantes 6 dans toutes les directions permet de créer un espace plus propice au développement de la faune, car les portions 6 de brins souples 5 forment alors, autour de l'élément 1, un réseau tridimensionnel de portions 6 de brins.

L'élément 1 est équipé à chacune des ses extrémités 4 d'un système de fixation permettant de fixer l'élément 1 à une structure que comporte le dispositif. L'élément 1 doté de ses systèmes de fixation est appelé ci-après un câble 26.

Tout système de fixation peut être prévu. Dans le cadre de ce mode de réalisation, on prévoit que la fixation des éléments 1 soit amovible dans le dispositif. Selon un exemple, le système de fixation choisi ici comprend ou est associable à un système à crochet.

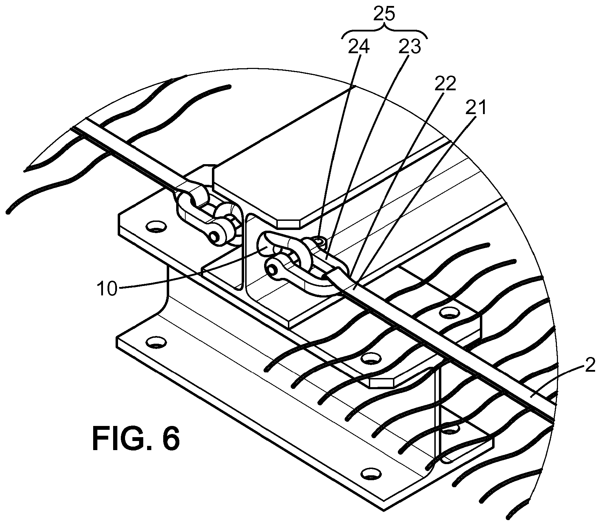

La figure 6 est un exemple d'un mode de réalisation de système de fixation (qui est représenté avant la mise en œuvre de la torsade). Cet exemple est donné à l'extrémité commune des bandes 2 où la pliure a été réalisée. Une couture transversale 21 s'étendant selon la direction T à distance de l'extrémité pliée, permet de définir une boucle 22 entre la pliure et la couture transversale 21. Un organe de fixation rigide est associé à la boucle. Par exemple, un étrier 23 est inséré dans la boucle 22, puis est fermé par une goupille 24, de manière à former un anneau 25 rigide solidaire de l'élément 1. Cette réalisation permet de ne pas percer les bandes et par conséquent de ne pas les fragiliser. L'anneau 25 est associable à un crochet.

A noter que si l'extrémité considérée des bandes ne comporte pas une telle pliure, une boucle peut être réalisée en retournant l'extrémité d'une des bandes et en la cousant par une couture transversale à une portion intermédiaire de cette même bande et à l'extrémité de l'autre bande qui y est superposée.

L'assemblage du crochet à l'anneau 25 permet d'introduire un degré de liberté supplémentaire au niveau de cet assemblage, permettant ainsi un mouvement de l'élément 1 par rapport à la structure support.

Le crochet peut lui-même être un système pouvant prendre une configuration ouverte, dans laquelle il peut être assemblé à l'anneau 25, et une configuration fermée, dans laquelle il ne peut être dissocié de l'anneau 25. Il faut l'action d'un utilisateur pour passer de l'état fermé à l'état ouvert. Il s'agit d'un système de type mousqueton.

Des ridoirs (non représentés) peuvent également être prévus à l'une des extrémités de l'élément 1, entre l'extrémité de l'élément 1 et le crochet, de manière à pouvoir régler la tension de l'élément 1 dans la structure du dispositif conforme à l'invention. Le ridoir comporte une extrémité solidaire de l'anneau 25, et une deuxième extrémité prévue pour coopérer avec le crochet. Un tel ridoir présente une longueur ajustable. En effet, la tension de l'élément 1 est directement liée au degré de torsion qui lui est imposé, qui est également liée à sa longueur. Le ridoir ré-introduit un degré de liberté permettant de décorréler la tension de l'élément 1 de la longueur du câble 26.

En variante non représentée, le système de fixation comprend un crochet adapté pour coopérer avec un anneau solidaire de la structure.

Selon un exemple, la structure du dispositif conforme à l'invention comporte deux montants 11 entre lesquels est tendu au moins un câble 26, et par conséquent un élément 1 conforme à l'invention.

Il est à noter que, suivant d'autres exemples de réalisation de l'invention, les deux montants 11 pourraient être remplacés par un cadre fermé.

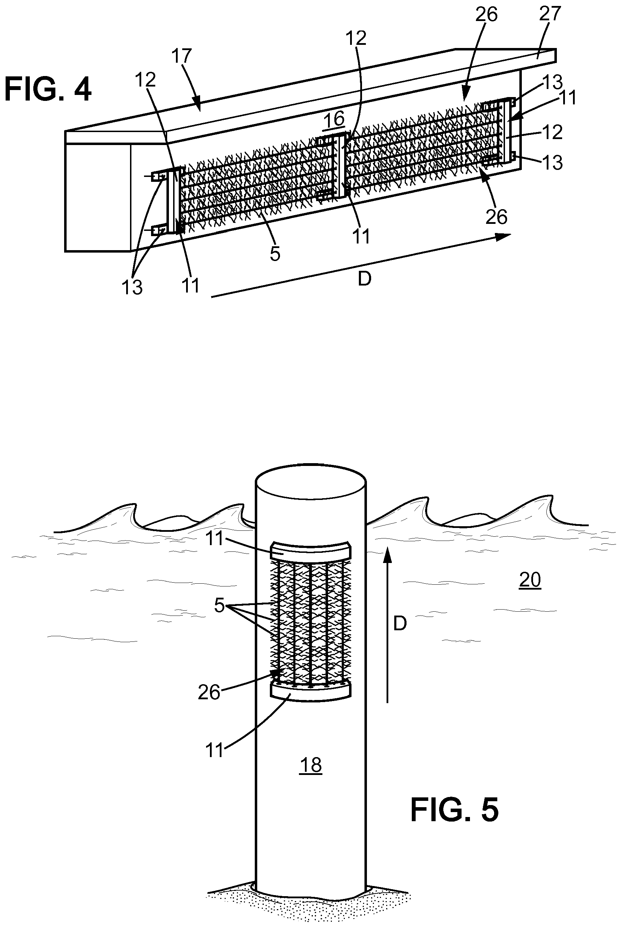

Les deux montants sont espacés l'un de l'autre suivant la direction longitudinale D (voir figures 4 ou 5).

La figure 4 montre un exemple de réalisation d'un montant 11 : il comporte une poutre 12 s'étendant suivant une direction transversale à la direction suivant laquelle s'étend l'élément 1.

La poutre 12 est solidarisée à deux plots 13, permettant de fixer la poutre 12 à un support plat (par exemple un mur en béton 16 d'un quai).Les plots 13 sont par exemple placés aux extrémités de la poutre 12, Les plots 13 permettent également de placer la poutre 12 à distance du support plat (voir figure 3).

La poutre 12 porte des organes de fixation aux câbles 26. Les organes de fixation sont par exemple les crochets associés respectivement à un des systèmes de fixation du câble 26 respectif. Les organes de fixations sont espacés, par exemple régulièrement, sur la longueur de la poutre 12. On peut prévoir des trous traversants espacés régulièrement sur la longueur de la poutre 12 et dans lesquels peuvent être fixés des crochets.

En une extrémité, la fixation d'un câble 26 sur une poutre 12 se fait par connexion d'un crochet de la poutre avec le système de fixation du câble 26. Une fixation est également prévue à l'extrémité opposée du câble 26.

Grâce à cette réalisation, plusieurs éléments 1 peuvent être tendus entre deux montants 11, les éléments 1 étant montés parallèles entre eux suivant la direction longitudinale D, et espacés les uns des autres suivant une direction transversale d'un intervalle minimum correspondant au moins à l'espace existant entre deux trous adjacents du montant 11. La distance entre deux éléments 1 adjacents est par exemple de l'ordre de la longueur des brins 5.

Comme il a été indiqué ci avant, les plots 13 permettent de fixer les poutres 12 à distance d'un support plat 16 (mur d'un quai, par exemple, pouvant être en maçonnerie, en béton ou en palplanches). Les deux montants 11 vont être espacés d'un espacement donné, la tension de l'élément 1 étant réglée par la torsion de celui-ci autour de son axe longitudinal, et le ridoir voyant sa longueur ajustée pour s'adapter à l'espacement entre les deux montants 11. La tension est dimensionnée en fonction des efforts estimés avoir à être subis par le câble 26, notamment en fonction des flux liquides (houle ou mouvements causés par des bateaux par exemple).

La distance d entre le support plat 16 et la poutre 12 du montant 11 est montrée en figure 3. Dans cette configuration, au moins un des câbles 26 est immergé. Les brins 5 sont réalisés dans un matériau d'une densité suffisamment proche de celle de l'eau, et d'une suffisante flexibilité, pour conserver une mise en volume des brins une fois le câble immergé. En effet, si la densité des brins était trop faible, les brins tendraient à tous flotter, retenus par les bandes, donc à s'orienter parallèlement les uns aux autres vers le haut. Si la densité des brins était trop élevée, les brins tendraient à tous couler, retenus par les bandes, donc à s'orienter parallèlement les uns aux autres vers le bas. La flexibilité (ou souplesse) des brins permet également aux portions saillantes de ceux-ci de se déplacer librement au gré des écoulements d'eau.

La distance d doit être suffisante pour offrir un espace d'abris aux juvéniles et permettre le battement des éléments 1 sous l'effet des écoulements d'eau. La distance d est ici une distance moyenne, dépendant de la distance de la poutre 12 au support 16 définie au niveau de chaque plot 13. En effet, chaque plot 13 peut être de hauteur réglable afin de régler facilement la position du câble 26, et en particulier de s'adapter à une éventuelle irrégularité de la surface du support 16.

Dans le cadre de l'exemple illustré, la distance d est sensiblement de 30 cm.

Il devra être entendu que l'invention n'est pas limitée au mode de réalisation de plot illustré sur la figure 3 : il pourrait être prévu, sans sortir du cadre de l'invention, des plots permettant de faire varier la distance d.

Par ailleurs, cette distance d peut être inférieure à la distance horizontale entre une poutre 27 de couronnement du quai et le mur vertical 16 du quai, de sorte que les navires ne puissent pas endommager le dispositif conforme à l'invention (dans le cas où un câble 26 serait directement fixé au quai, la distance d serait d'ailleurs proche de 0).

Dans l'exemple présenté en figure 3, on envisage de tendre au moins deux câbles 26 parallèles entre eux, entre deux montants 11. Toutefois, en variante, les câbles 26 ne sont pas nécessairement positionnés parallèlement. Suivant encore une autre variante, on peut tendre un câble entre deux montants 11, les montants 11 pouvant être réalisés de manière assez simple uniquement par un plot de fixation au support (quai).
Le montant 11 présenté en figures 3 ou 4, comportant une poutre et deux plots, permet de tendre deux câbles 26 ou plus, par une structure assez simple, et dont l'empreinte de fixation au quai est réduite.

La figure 4 illustre un mode de réalisation d'un dispositif conforme à l'invention, monté sur le quai 17 d'un port.

Le dispositif comporte trois montants 11 montés sur le mur 16 du quai 17 grâce aux plots 13, en retrait par rapport à la poutre de couronnement 27 du quai 17. On utilise notamment trois montants 11 parallèles. Ainsi, la structure qui a été décrite ci-dessus avec deux montants parallèles 11 est dupliquée, les deux systèmes étant juxtaposés selon la direction D, un montant commun étant commun aux deux systèmes. Le montant commun, intermédiaire entre les deux montants d'extrémité, comprend des systèmes de fixation à des câbles s'étendant de part et d'autre de lui.

Cinq éléments 1 conformes à l'invention sont tendus entre deux montants 11 adjacents, suivant la direction longitudinale D.

La surface efficace du dispositif montré en figure 6 est de l'ordre de 20 m². Les montants 11 s'étendent sur une hauteur de 2 m, et l'extrémité supérieure des montants 11 est placée à sensiblement 50 cm sous le niveau moyen de l'eau 20. Le montant 11 est positionné pour que les câbles 26 soient immergés même quand le niveau de l'eau est au plus bas (effet des marées/sécheresses, notamment).

En variante, la structure représentée sur la figure 4 pourrait également être dupliquée verticalement. On peut ainsi réaliser une structure d'accueil présentant une géométrie adaptable à la zone à équiper, à partir d'éléments modulaires réglables simples à assembler.

Dans le cadre de ce mode de réalisation, les montants 11 s'orientent suivant une direction sensiblement verticale et les éléments 1 (ou câbles 26) s'orientent suivant une direction horizontale.

L'invention ne doit toutefois pas être limitée au positionnement vertical des montants.

Un autre mode de réalisation est montré en figure 5, illustrant un mode de réalisation suivant lequel les montants 11 sont positionnés suivant une direction sensiblement horizontale.

Par ailleurs, dans ce mode de réalisation, les montants 11 de l'exemple illustré en figure 5 ne sont pas nécessairement rectilignes, mais courbes et ils sont fixés sur un poteau 18 cylindrique immergé dans l'eau 20. Les éléments 1 (ou câbles 26) conformes à l'invention sont tendus entre les deux montants 11 suivant une direction longitudinale qui, cette fois ci, est orientée verticalement.

Ainsi, selon les réalisations, les montants 11 peuvent présenter une forme appropriée à l'application.

Dans le cas des exemples décrits ci-dessus, les dispositifs ne comportent que des éléments 1 positionnés parallèlement entre eux. On pourrait prévoir de croiser les éléments 1 sans sortir du cadre de l'invention. Des dispositifs pourraient ainsi être réalisés dans des plans circulaires, en mettant en œuvre un cadre circulaire, où les câbles 26 seraient disposés radialement, fixés au cadre circulaire par leurs extrémités, avec une liaison entre les câbles 26 au centre du cadre circulaire.

Grâce à la conception du dispositif conforme à l'invention, ce dernier peut facilement être fixé sur les quais de constructions portuaires déjà existantes. De plus, le dispositif est conçu de telle façon qu'il ne peut pas abimer les coques des bateaux, et inversement.

Par ailleurs, les éléments de dispositif conforme à l'invention peuvent être facilement retirés du dispositif, pour accéder rapidement au quai sur lequel le dispositif est fixé, par exemple pour un nettoyage du quai ou autre, ou bien tout simplement pour remplacer un élément 1 par un autre.

## Revendications

1. Elément (1) pour le développement de la faune ou de la flore aquatique, comportant un réseau de brins souples (5), fixés entre deux bandes souples (2) s'étendant suivant une direction longitudinale et solidarisées ensemble, les deux bandes souples (2) présentant au moins un bord (3) et lesdits brins (5) présentant une portion saillante (6) dudit au moins un bord (3) suivant une direction transversale.

2. Elément selon la revendication 1, **caractérisé en ce que** les brins souples (5) sont juxtaposés les uns par rapport aux autres.

3. Elément selon la revendication 1 ou 2, **caractérisé en ce que** le réseau de brins souple (5) comporte des brins en fibres naturelles.

4. Elément selon la revendication 3, **caractérisé en ce que** les fibres naturelles sont des fibres de chanvre, des fibres de coco ou un mélange de fibres de chanvre et de coco.

5. Elément selon l'une quelconque des revendications précédentes, **caractérisé en ce que** le réseau de brins souples comporte des brins synthétiques,
et optionnellement dans lequel lesdits brins synthétiques sont en polypropylène.

6. Elément selon l'une quelconque des revendications précédentes, **caractérisé en ce que** ladite portion saillante (6) présente une longueur d'au moins 10 cm.

7. Elément selon l'une quelconque des revendications précédentes, **caractérisé en ce que** les bandes souples (2) sont réalisées en matériau synthétique, et optionnellement dans lequel ledit matériau synthétique est du polypropylène.

8. Dispositif d'habitat artificiel comportant au moins un élément selon l'une quelconque des revendications précédentes.

9. Dispositif selon la revendication 8, **caractérisé en ce que** ledit élément (1) est torsadé, tendu et fixé entre deux extrémités (4) espacées l'une de l'autre suivant une direction longitudinale.

10. Dispositif selon la revendication 9, **caractérisé en ce qu'**il comporte plusieurs éléments (1) selon l'une quelconque des revendications 1 à 7 et **en ce que** les éléments (1) sont positionnés parallèlement entre eux suivant ladite direction longitudinale, les éléments (1) étant espacés les uns des autres suivant une direction transversale.

11. Dispositif selon la revendication 9, comprenant plusieurs éléments (1) torsadés, dans lequel les éléments (1) torsadés se croisent.

12. Dispositif selon l'une quelconque des revendications 9, 10 ou 11, **caractérisé en ce que** les extrémités (4) sont fixées respectivement chacune à un montant (11), les montants (11) étant fixés sur un support (16) au moyen d'au moins un plot (13) de fixation, apte à fixer les montants (11) à distance dudit support (16), ledit au moins un plot (13) présentant une surface de fixation apte à venir prendre appui contre ledit support (16).

13. Dispositif selon la revendication 12, **caractérisé en ce que** la distance entre le montant (11) et le support (16) est sensiblement de 30 cm.

14. Dispositif selon la revendication 12 ou 13, **caractérisé en ce que** les montants (11) sont fixés à distance réglable du support (16).

## Patentansprüche

1. Element (1) zur Entwicklung der aquatischen Fauna oder Flora, umfassend ein Netz flexibler Stränge (5), die zwischen zwei flexiblen Bändern (2) befestigt sind, die sich in Längsrichtung erstrecken und miteinander verbunden sind, wobei die zwei flexiblen Bänder (2) mindestens einen Rand (3) aufweisen und die Stränge (5) einen Abschnitt (6) aufweisen, der von dem mindestens einen Rand (3) in einer Querrichtung hervorsteht.

2. Element nach Anspruch 1, **dadurch gekennzeichnet, dass** die flexiblen Stränge (5) bezüglich einander benachbart sind.

3. Elemente nach Anspruch 1 oder 2, **dadurch gekennzeichnet, dass** das Netz flexibler Strängen (5) Stränge aus Naturfasern umfasst.

4. Element nach Anspruch 3, **dadurch gekennzeichnet, dass** die Naturfasern Hanffasern, Kokosfasern oder eine Mischung aus Hanf- und Kokosfasern sind.

5. Element nach einem der vorhergehenden Ansprüche, **dadurch gekennzeichnet, dass** das Netz flexibler Stränge synthetische Stränge umfasst
und gegebenenfalls, wobei die synthetischen Stränge aus Polypropylen sind.

6. Element nach einem der vorhergehenden Ansprüche, **dadurch gekennzeichnet, dass** der hervorstehende Abschnitt (6) eine Länge von mindestens 10 cm aufweist.

7. Element nach einem der vorhergehenden Ansprüche, **dadurch gekennzeichnet, dass** die flexiblen Bänder (2) aus synthetischem Material hergestellt sind und gegebenenfalls, wobei das synthetische Material aus Polypropylen ist.

8. Vorrichtung für einen künstlichen Lebensraum, umfassend mindestens ein Element gemäß einem der vorhergehenden Ansprüche.

9. Vorrichtung nach Anspruch 8, **dadurch gekennzeichnet, dass** das Element (1) zwischen zwei in Längsrichtung voneinander beabstandeten Enden (4) verdrillt, gedehnt und fixiert ist.

10. Vorrichtung nach Anspruch 9, **dadurch gekennzeichnet, dass** sie mehrere Elemente (1) nach einem der Ansprüche 1 bis 7 umfasst und dass die Elemente (1) in der Längsrichtung parallel zueinander angeordnet sind, wobei die Elemente (1) in Querrichtung voneinander beabstandet sein.

11. Vorrichtung nach Anspruch 9, umfassend mehrere verdrillte Elemente (1), wobei sich die verdrillten Elemente (1) kreuzen.

12. Vorrichtung nach einem der Ansprüche 9, 10 oder 11, **dadurch gekennzeichnet, dass** die Enden (4) jeweils an einem Pfosten (11) befestigt sind, wobei die Pfosten (11) an einem Träger (16) durch mindestens einen Befestigungsbolzen (13) befestigt sind, der dazu geeignet ist, die Pfosten (11) in einem Abstand von dem Träger (16) zu befestigen, wobei der mindestens eine Bolzen (13) eine Befestigungsfläche aufweist, die dazu geeignet ist zur Anlage gegen den Träger (16) zu kommen.

13. Vorrichtung nach Anspruch 12, **dadurch gekennzeichnet, dass** der Abstand zwischen dem Pfosten (11) und dem Träger (16) im Wesentlichen 30 cm beträgt.

14. Vorrichtung nach Anspruch 12 oder 13, **dadurch gekennzeichnet, dass** die Pfosten (11) in einem regelbaren Abstand zum Träger (16) befestigt sind.

## Claims

1. An element (1) for developing aquatic fauna or flora, including a lattice of flexible strands (5), attached between two flexible strips (2) extending along a longitudinal direction and secured together, the two flexible strips (2) having at least one edge (3) and said strands (5) having a protruding portion (6) of said at least one edge (3) along a transversal direction.

2. The element according to claim 1, **characterised in that** the flexible strands (5) are juxtaposed in relation to one another.

3. The element according to claim 1 or 2, **characterised in that** the lattice of flexible strands (5) includes natural fibre strands.

4. The element according to claim 3, **characterised in that** the natural fibres are hemp fibres, coconut fibres or a mixture of hemp and coconut fibres.

5. The element according to any of the preceding claims, **characterised in that** the lattice of flexible strands includes synthetic strands, and optionally wherein said synthetic strands are made of polypropylene.

6. The element according to any of the preceding claims, **characterised in that** said protruding portion (6) has a length of at least 10 cm.

7. The element according to any of the preceding claims, **characterised in that** the flexible strips (2) are made of synthetic material, and optionally wherein said synthetic material is polypropylene.

8. A man-made habitat device including at least one element according to any of the preceding claims.

9. The device according to claim 8, **characterised in that** said element (1) is twisted, stretched and attached between two ends (4) spaced apart from one another along a longitudinal direction.

10. The device according to claim 9, **characterised in that** it includes several elements (1) according to any one of claims 1 to 7 and **in that** the elements (1) are positioned parallel with one another along said longitudinal direction, the elements (1) being spaced apart from one another along a transversal direction.

11. The device according to claim 9, comprising several twisted elements (1), wherein the twisted elements (1) intersect.

12. The device according to any of claims 9, 10 or 11, **characterised in that** the ends (4) are each attached respectively to a vertical member (11), the vertical members (11) being attached to a support (16) by means of at least one attachment block (13), capable of attaching the vertical members (11) at a distance from said support (16), said at least one block (13) having an attachment surface capable of bearing against said support (16).

13. The device according to claim 12, **characterised in that** the distance between the vertical member (11) and the support (16) is substantially 30 cm.

14. The device according to claim 12 or 13, **characterised in that** the vertical members (11) are attached at an adjustable distance from the support (16).
